Europäisches Patentamt

**European Patent Office**

**Office européen des brevets**

(19)

(11) Publication number: **0 102 129**

**A2**

# EUROPEAN PATENT APPLICATION

(12)

(21) Application number: **83201231.4**

(22) Date of filing: **26.08.83**

(51) Int. Cl.³: **H 04 Q 7/04**

(30) Priority: **28.08.82 GB 8224753**

(43) Date of publication of application:
**07.03.84 Bulletin 84/10**

(84) Designated Contracting States:
**AT BE DE FR GB IT NL SE**

(71) Applicant: **MOTOROLA GmbH
Heinrich-Hertz-Strasse 1
D-6204 Taunusstein(DE)**

(72) Inventor: **Malmbak, Per
Flachsbuhlstrasse 1.B
D-6204 Taunusstein 2(DE)**

(74) Representative: **Ibbotson, Harold
Motorola Inc Patent and Licensing Operations - Europe
Viables Industrial Estate
Basingstoke Hants RG22 4PD(GB)**

(54) Radio communication system.

(57) A radio communication system having a plurality of transmitters (10, 20, 30 & 40) which each transmit on a different channel and which each include means (11, 12) for periodically transmitting a channel signal on the transmitter's channel, and a receiver (50) including a tuner (54) for tuning the receiver to any one of the channels, a scanner (64) for causing the tuner to scan the channels and a re-settable timer (62) for activating the scanner when a channel signal has not been received on the channel to which the receiver is tuned for a predetermined time which is greater than the time period of the channel signals and for de-activating the scanner when a channel signal is received on the channel to which the receiver is tuned. The channel signals may be unmodulated carrier signals and the system may operate as a two-way duplex system.

The system allows a mobile receiver to be automatically tuned to a correct channel when moving between different channel coverage areas without the transmitters continuously transmitting unmodulated carrier signals.

-1-

## RADIO COMMUNICATION SYSTEM

### FIELD OF INVENTION

This invention relates to radio communication systems and particularly, though not exclusively, to multi-channel, wide-area radio communication systems.

### BACKGROUND OF INVENTION

In a typical such radio communication system a number of fixed transmitters are positioned at physically separated sites so that the coverage areas of the transmitters overlap. A mobile receiver can thus communicate with at least one of the transmitters over a wide area. In systems where transmitters with overlapping coverage areas are arranged to transmit on different frequency channels, the receiver is commonly provided with tuning means for enabling the receiver to be tuned to any one of the channels and the receiver operator re-tunes the receiver manually to a new channel as the mobile receiver crosses from the coverage area of one transmitter to the coverage area of another. Such manual re-tuning is, at best, cumbersome, and may be dangerous if, for example, the operator is simultaneously driving a car.

Where each transmitter is continuously transmitting, it is known (for example, from U.S. Patent No. 3906166) for the receiver automatically to scan the channels used by the transmitters and to tune the receiver to the channel on which the received signal is strongest.

However, for much of the system operating time the transmitters are not transmitting information, and while in the United States of America continuous unmodulated carrier transmission is permitted, such transmission is impermissible in most European countries.

It is an object of one aspect of the present invention to provide a radio communication system wherein the above disadvantages may be overcome.

## SUMMARY OF INVENTION

According to a first aspect of the present invention, in a radio communication system having a plurality of transmitters which each transmit on a different one of a plurality of channels and a receiver including tuner means for tuning said receiver to any one of said plurality of channels and scanner means for causing said tuner means to scan said plurality of channels, each said transmitter includes means for periodically transmitting a channel signal on its transmitter's channel and said receiver further includes timer means for activating said scanner means when a channel signal has not been received on the channel to which said receiver is tuned for a predetermined time which is not less than the time period of said channel signals, and for de-activating said scanner means when a channel signal is received on the channel to which said receiver is tuned.

In accordance with a second aspect of the invention a transmitter for use in a radio communication system according to the first aspect of the invention includes means for periodically transmitting a channel signal on the transmitter's channel.

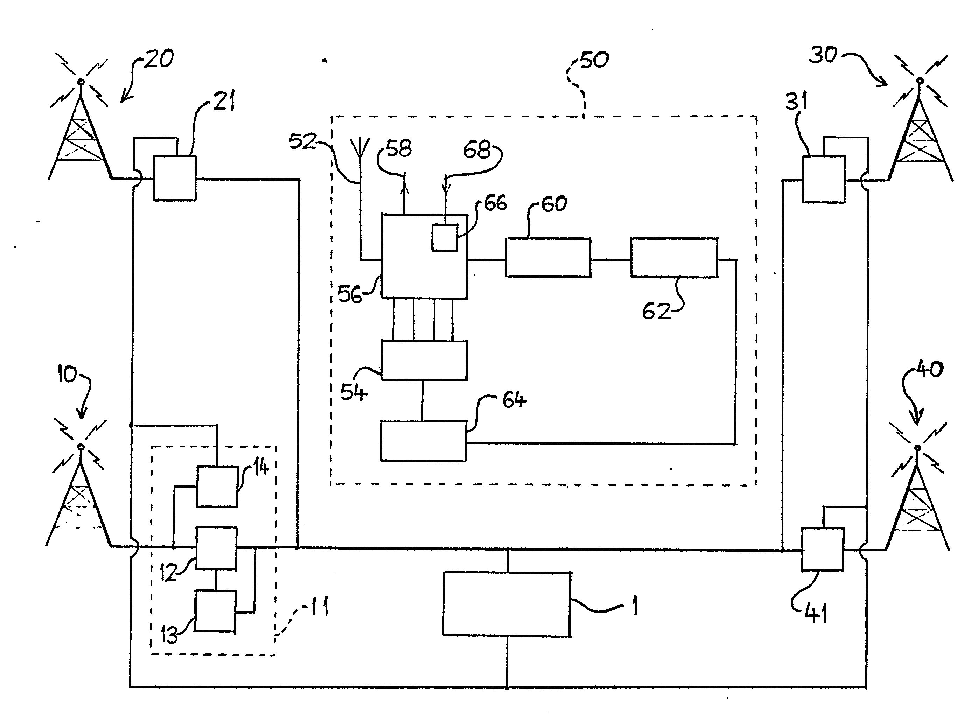

One radio communication system in accordance with the invention will now be described, by way of example only, with reference to the accompanying drawing.

0102129

-3-

BRIEF DESCRIPTION OF DRAWING

The accompanying drawing shows a block-schematic diagram of the system.

DETAILED DESCRIPTION OF EXAMPLE OF INVENTION

Referring now to the drawing, the system includes four similar, fixed, radio transmitters 10, 20, 30 and 40. The transmitters are located at physically separated sites and have overlapping coverage areas. The transmitters each have similar transmission circuitry 11, 21, 31 and 41 respectively, only one of which, 11, is shown in detail. The transmission circuitry 11 comprises a carrier signal generator 12 for generating a carrier signal which is modulated by information, e.g. an audio signal, fed simultaneously to all four transmitters from a common control 1 for simultaneous transmission on four different channels.

In order for the transmitters not to transmit continuous unmodulated carrier signals, the carrier signal generator 12 is arranged to be normally activated only when the information for transmission is fed from the common control 1. However, the transmission circuitry 11 also includes a re-settable timer 13. The timer is reset by the presence of information from the common control, but as soon as the information is discontinued, the timer begins its timing period and if no further information is received in its timing period (which information would reset the timer) the timer produces at the end of its timing period an output pulse which is applied to the carrier signal generator and causes the transmission of an unmodulated carrier signal for the duration of the pulse. The timer output pulse resets the timer 13 which then begins timing again, this cycle repeating until interrupted by further information for transmission. In the presently described system the timing period of the timer 13 is approximately twenty seconds and the duration of the timer output pulse is approximately one second.

The system also includes one or more mobile receivers, 50, only one of which is shown. The receiver 50, which may for example be mounted in a car, receives information from the transmitter or transmitters in whose coverage area the receiver is located.

The receiver 50 includes an antenna 52 for receiving radio signals transmitted from the transmitters 10, 20, 30, 40. The receiver also includes a tuner 54 for tuning the receiver as will be explained below, to one of the four channels on which information is transmitted by the transmitters. De-modulating circuitry 56 de-modulates signals received on the channel to which the receiver is tuned and the information thus recovered is output on line 58 from where it may be applied, in the case of audio information, to an amplifier and loudspeaker (not shown).

The receiver 50 also includes a threshold detector 60 which detects the presence of a received signal on the channel to which the receiver is tuned and which produces an output when the detected signal has a magnitude greater than a predetermined threshold. The output of the threshold detector 60 is applied to the reset input of a re-settable timer 62. So long as the threshold detector produces an output the timer 62 remains in its reset condition, but as soon as the output from the threshold detector is discontinued the timer 62 begins its timing period and if the threshold detector 60 produces no further output in the timer's timing period (which output would reset the timer) the timer 62 produces at the end of its timing period an output which is maintained until the timer 62 is reset.

The output of the timer 62 is applied to a scanner 64. When the timer 62 produces its output the scanner 64 is activated to cause the tuner 54 to scan the four channels cyclically. This scanning continues, the tuner being tuned to each of the four channels in turn until on one of the channels a signal is received which has a large enough magnitude to cause the threshold detector 60 to produce its output. When the threshold detector produces its output the timer 62 is reset. The resetting of the timer de-activates the scanner 64 and causes the tuner 54 to remain tuned to the channel on which the signal which activated the threshold detector was received. The tuner then remains tuned to that channel until no signal of the required magnitude is received on the channel for a time greater than the timing period of the timer 62. In the presently described system the timing period of the timer 62 is approximately thirty seconds.

Therefore, in use, while the receiver 50 remains in the coverage area of a single transmitter 10, 20, 30 or 40 the receiver will remain tuned to the channel on which that transmitter transmits. While the transmitter is transmitting information the receiver's timer 62 is held reset and so the scanner 64 is de-activated. When the transmitter ceases to transmit information the receiver's threshold detector 60 ceases to produce its output and so the timer 62 begins its timing period. However, the timer 62 never completes its timing period, and so does not activate the scanner 64, because every twenty seconds the transmitter transmits a one-second pulse of unmodulated carrier signal on its channel. This pulse is received by the receiver 50 where it causes the threshold detector to produce its output and reset the timer 62.

When the receiver moves from the coverage area of a first one of the transmitters to the overlapping coverage area of a second one of the transmitters, the receiver will remain tuned to the channel of the first transmitter until (as the receiver leaves the overlap region) the signals received from the first transmitter are not of sufficient magnitude to cause the threshold detector 60 to produce its output. When this occurs the timer 62 begins its timing period and thirty seconds later activates the scanner 64. The tuner 54 then scans the four channels until a signal is received (on the second transmitter's channel) which is of sufficient magnitude to cause the threshold detector to produce its output and so reset the timer 62 and de-activate the scanner 64. If information is being transmitted on the second transmitter's channel then the re-tuning to the new channel will occur within the scan period of the scanner and if no information is being transmitted on the second transmitter's channel then the re-tuning to the new channel may take up to twenty seconds, i.e. until an unmodulated carrier signal pulse is received on the second transmitter's channel.

Although the system described so far is a one-way system, i.e. transmission of information occurs only from the fixed transmitters 10, 20, 30, 40 to the one or more mobile receivers 50, the system may, if desired, operate as a two-way system. In order to achieve two-way communication the receiver de-modulating circuitry 56 is provided also with carrier signal generating circuitry 66.

The circuitry 66 generates a carrier signal, which is modulated by information, e.g. an audio signal, applied on line 68. The modulated carrier signal so produced is transmitted via the antenna 52. The carrier signal generated by the circuitry 66 also causes the threshold detector 60 to produce its output, thereby holding the timer 62 in its reset condition and de-activating the scanner 64 and so maintaining the channel tuning of the receiver 50. When transmission from it ceases, the receiver resumes its receive function described above.

In order to complete the two-way communication, the transmission circuitry 11 (and similarly also 21, 31 and 41) also includes demodulating circuitry 14 for demodulating signals received. The information recovered by the demodulating circuitry 14 is fed to the common control 1.

In order that there is no interference between the signals transmitted by the receivers and the unmodulated carrier signal pulses transmitted by the transmitters the system is operated as a duplex system, i.e. the transmitters and receivers transmit and receive on different frequencies. In this way interference is avoided and the presence of received information at transmitter 10, for example, does not affect the resetting of the timer 13 and so the transmission of the unmodulated carrier signal pulses continues even when information is being received at the transmitter, maintaining the tuning of other receivers tuned to the transmitter's channel.

It will be appreciated that although in the above system four transmitters having overlapping coverage areas are described as transmitting respectively on four different channels, the system is not limited to four transmitters or to four channels. The number of channels used may be reduced if any two of the transmitters do not have overlapping coverage areas, or additional transmitters may be used transmitting on further different channels if it desired to extend the overall system coverage area into areas which overlap each of the coverages areas of the four transmitters.

It will also be appreciated that although in the above system audio information is described as being communicated between the transmitters and receivers, the system is not limited to the communication of audio information and the information may be of any form required, e.g. voice or data information, and may be coded as desired.

## CLAIMS

1.  A radio communication system having a plurality of transmitters which each transmit on a different one of a plurality of channels and a receiver including tuner means for tuning said receiver to any one of said plurality of channels and scanner means for causing said tuner means to scan said plurality of channels wherein each said transmitter includes means for periodically transmitting a channel signal on its transmitter's channel, and said receiver further includes timer means for activating said scanner means when a channel signal has not been received on the channel to which said receiver is tuned for a predetermined time which is not less than the time period of said channel signals, and for de-activating said scanner means when a channel signal is received on the channel to which said receiver is tuned.

2.  A system according to claim 1 wherein said channel signals are unmodulated carrier signals.

3.  A system according to claim 1 or 2 further comprising channel signal threshold detector means for producing an output signal when a channel signal having a value greater than a predetermined value is received on the channel to which the receiver is tuned, the output of said channel signal threshold detector means being connected to said timer means so that said timer means is responsive only to channel signals having values greater than said predetermined value.

4.  A system according to claim 3 wherein said timer means comprises a resettable timer arranged to be reset by said channel signal threshold detector means output signal so as to produce an output signal after said predetermined time unless and until reset, and said scanner means is arranged to be activated by said timer means output signal.

5. A system according to claim 1, 2, 3 or 4 wherein said predetermined time is substantially thirty seconds, said time period of said channel signals is substantially twenty seconds and the duration of said channel signals is substantially one second.

6. A system according to any preceding claim wherein each said transmitter includes receiving means for receiving signals on a reception frequency different from that on which the transmitter transmits and the receiver includes transmitter means for transmitting signals on the reception frequency of the transmitter to whose channel the receiver is tuned, said timer means being arranged to de-activate said scanner means when said transmitter means is active.

7. A transmitter for use in a radio communication system according to any preceding claim including means for periodically transmitting a channel signal on the transmitter's channel.

8. A transmitter according to claim 7 wherein said channel signal is an unmodulated carrier signal.

9. A transmitter according to claim 7 or 8 wherein the channel signal time period is substantially twenty seconds and the channel signal duration is substantially one second.

10. A transmitter according to claim 7, 8 or 9 including receiver means for receiving signals on a reception frequency different from that on which the transmitter transmits.